# EUROPEAN PATENT SPECIFICATION

(11) **EP 2 719 669 B1**
(45) Date of publication and mention of the grant of the patent: **03.11.2021**
(21) Application number: 13185467.1
(22) Date of filing: 22.09.2013
(51) Int. Cl.: C02F 3/08, B01D 53/84

(54) **BIOREACTOR AND METHOD FOR PURIFYING MALODOROUS GASES AND WASTEWATER**
BIOREAKTOR UND VERFAHREN ZUR REINIGUNG VON ÜBELRIECHENDEN GASEN UND ABWASSER
BIORÉACTEUR ET PROCÉDÉ D'ÉPURATION DE GAZ MALODORANTS ET D'EAUX USÉES

(30) Priority: 10.10.2012 CN 201210381436
(43) Date of publication of application: 16.04.2014
(73) Proprietor: Nanjing University, 210046 Nanjing Jiangsu (CN)
(72) Inventor: Ren, Hongqiang, 210046 Nanjing (CN); Xu, Ke, 210046 Nanjing (CN); Ding, Lili, 210023 Nanjing (CN); Geng, Jinju, 210046 Nanjing (CN)
(74) Representative: Niburska, Danuta

(56) References cited:
- EP-A1- 0 385 555
- EP-A1- 0 442 157
- EP-A2- 0 472 249
- DE-A1- 4 205 572
- DE-A1-102009 025 082
- JP-A- S6 349 297
- JP-A- 2000 342 928
- US-A- 4 869 824
- US-A- 5 599 443
- US-A- 5 985 649
- US-A1- 2012 193 287

## Description

The invention relates to a biological device and a method for purifying malodorous gas and wastewater, and more particularly to a bioreactor and a method for purifying malodorous gas and wastewater.

According to Chinese national standard GB14554-93, malodorous gas refers to a group of gaseous matters that stimulate olfactory organs to produce unpleasant feelings and affect the living environment. Industrial production, municipal wastewater, sludge treatment and garbage disposal facilities are main sources of malodorous gas. Malodorous gas is primarily generated from wastewater pumping stations, influent grille, drying gas settling basin, and primary sedimentation tank during the wastewater treatment process; sludge thickening, dehydration and drying, and transporting during the sludge treatment process; composting, landfill, incineration, and transporting during the waste disposal process; and production source of chemical, pharmaceutical, rubber, plastics, paint and coatings, printing and dyeing leather, livestock breeding and fermentation pharmaceutical. Different treatment facilities and process will produce a variety of malodorous gas. Hydrogen sulfide is the main malodorous gas produced in the water inlet pump station in wastewater treatment plant. Odor produced from the sludge anaerobic digestion process in the primary sedimentation tank includes hydrogen sulfide and other sulfur-containing gases; and odor produced from the stable process mainly includes ammonia and other volatile substances. Waste composting process will produce ammonia, amines, sulfur compounds, fatty acids, aromatic and dimethyl sulfur odors. Sludge during the drying process may produce a small amount of hydrogen sulfide, mercaptan, and dimethyl sulfide gas. Malodorous substances have an abundant types and a wide source. Malodorous substances have different degrees of toxicity on human respiratory, digestive, cardiovascular, endocrine, and nervous system. Particularly, aromatic compounds, such as benzene, toluene, styrene, also enables to induce distortion and cancer of body tissue. Thus, malodorous gas treatment is an important process in environmental pollution control. Two typical methods for treating malodorous gas include a physicochemical method and a biological method. The physicochemical method has complicate process and device, high operation cost, but a low efficiency in treating some of the malodorous gas. The biological method has a high efficiency of treatment, wide application, simple process, and low cost, thereby being a main technology in treating malodorous gas.

Typical biological treatments of malodorous gas include biotrickling filtration, biological filtration, bioscrubber, and biological aeration. The biotrickling filtration includes filling an inert filler into a biotrickling filter, that is, a reactor; inoculating microbes and controlling a proper condition for biofilm culturing on the inert filler; covering a surface of the inert filler by the biofilm; and meanwhile continuously spraying nutrient solution necessitated by metabolism of the microbes on the filler by using a circulation system. When the malodorous gas passes through the filler in the coupling bioreactor, pollutants are degraded by microbes. The biotrickling filtration has advantages of high load, and is highly controllable, so that it has been the most widely used biological treatment of malodorous gas.

For example, EP 0385555 A1 recites an apparatus for combined air and water purification which includes one or more compartments partially filled with biologically active material and provided with inlets and outlets. JP 2000 342928 A recites a deodorizing device that is configured not to release ammonia. JP S63 49297 A recites a wastewater treatment device including a treatment container inside which carriers and carrier supports are disposed. EP 0442157 A1 recites an apparatus for ground-water purification which includes one or more compartments placed above or next to one another, provided with inlets and outlets, and partially filled with a biologically-active material. US 2012/193287 A1 recites an installation for removing dissolved biodegradable compounds which includes a vessel, or a tank filled with packing elements. DE 102009025082 A1 recites a process for purifying wastewater, in which the wastewater is passed through a tank containing fillers to which aerobic microorganisms are attached. DE 4205572 A1 recites a method for carrying out chemical and/or physical and/or biological reactions, in which the reactants are brought into contact with reaction-promoting particles.

However, problems, such as a large pressure fall, biomass accumulation, and blockage of the filler, exist in actual operation of the biotrickling filter. Furthermore, in order to assure the normal growth of the microbes, nutrient solution is required to spray on the filler, during which a water film is easily formed on the surface of the filler and the water-insoluble substances are difficult to be utilized by the microbes. Thus, the selection and arrangement of the filler, the performance optimization, and the bioreactor structure have been the focuses of the researchers in the field to improve the efficiency of the biotrickling filter. Chinese Patent Publication No. CN101125280A has disclosed a biotrickling filter for treating volatile malodorous gas. A light expanded clay particle is selected as a filler. A filler layer is a concentric cylinder having sleeve type structure. A diameter of the filler particle increases from a center to an edge. Filler particles arranged in a central area have a small diameter, and filler particles arranged around a wall of the coupling bioreactor have large diameter. Thus, the biomass arrangement in the coupling bioreactor is uniform, thereby effectively using the space of the biotrickling filter. Chinese Patent Publication No. CN1557741A has disclosed a multifunctional biotrickling filter deodorizer device. The device includes a lower section and an upper section connected by a flange. A gas inlet pipe is arranged on an upper part of the upper section; a water drainage pipe and a backwash pump are arranged on a bottom of the lower section. Both the two sections are provided with liquid distributors. The invention is capable of saving money and space. Chinese Patent Publication No. CN2695090Y has disclosed a high mass transfer biotrickling filter for purifying and deodorizing malodorous gas. The biotrickling filter includes three sections, each section is provided with an automatic water distributor. Each section includes a plurality of layers filled with light porous plastic and soft fiber ball filler. The biotrickling filter n is capable of treating a plurality of malodorous gas. Chinese Patent Publication No. CN1634637A has disclosed a biological deodorizer including a combination of a biotrickling filter and a bioscrubber. The biological deodorizer is highly efficient. Chinese Patent Publication No. CN1994533A has disclosed gas-liquid cross flowing biotrickling filter. The gas flow is in a horizontal direction, and the liquid flow is in a longitudinal direction. The device reduces the height the nutrient solution flows through, and has a uniform distribution, an enhanced performance of gas-liquid mass transfer, and a strong biodegradation. Chinese Patent Publication No. CN1752034A has disclosed a biotrickling filtration and a deodorizing device. The device is divided into two sections by a partition, and each section is provided with a spray thrower and filled with a new filler. Chinese Patent Publication No. CN101077472A has disclosed a biotrickling filter provided with a purifying and circulating device, and also disclosed a method for preparing a biofilm.

Although the above patents make some improvement on the biotrickling filter, they do not fundamentally solve the problems existing in the biotrickling filter, but still require to use the fixed filler and to periodically spray the nutrient solution onto the filler.

### Technical problems to be solved in the invention:

The invention focuses on problems existing in the conventional biotrickling filters that a large pressure drop of the filler occurs during the operation of the biotrickling filter; biomass accumulation and blockage of the filler easily occurs in a bottom of the biotrickling filter, thereby requiring to be washed frequently. In view of the above-described problems, it is one objective of the invention to provide a bioreactor and a method for purifying malodorous gas and wastewater.

### Principle of the invention is as follows:

The invention employs a biofilm having a long biological chain and a large biomass growing on a suspended carrier to treat malodorous gas and wastewater; the bioreactor is aerated, and meanwhile the malodorous gas is introduced into the middle part of the bioreactor via an aerator in the form of microbubbles, so that the suspended carrier is in a continuously flow state in the middle part of the bioreactor; pollutants in the wastewater and the malodorous gas fully contact with the biofilm of the suspended carrier during the flowing up process, and microbes degrade the pollutants of the wastewater and the malodorous gas and propagate. The flow state of the suspended carrier prevents problems of large pressure drop, biomass accumulation, and filler blockage, and improves the mass transfer. Matters in the waste water provide nutrient for the microbes, so that the nutrient solution is no need to add. The biofilm having a large biomass and a long biological chain attached to the filler is capable of completely degrading the pollutants in the malodorous gas and the wastewater.

### Technical scheme of the invention is as follows:

A bioreactor for purifying malodorous gas and wastewater is in the form of a tower. A gas inlet pipe and a second microporous aerator are arranged at a middle part of the bioreactor and are connected with each other. The malodorous gas is introduced into the bioreactor from a middle part of the coupling bioreactor. A water inlet pipe, an air inlet pipe, and a first microporous aerator are arranged at a bottom of the coupling reactor. The water inlet pipe is connected to a water distributor. The air inlet pipe is connected to the first microporous aerator. The wastewater and air are introduced into the bioreactor from the bottom. An annular overflow weir is arranged at an upper part of the bioreactor and is connected to a water outlet pipe for discharging water. A net cover is disposed on the annular overflow weir. A gas outlet pipe is arranged at a top of the bioreactor for discharging treated gas. The bioreactor is filled with a suspended carrier, particularly a polyethylene suspended carrier. A density of the suspended carrier before a biofilm formation is between 0.97 and 0.98 g/cm³; and a density of the suspended carrier after the biofilm formation is 1 g/cm³. A ratio between a volume of the suspended carrier and a capacity of the bioreactor is between 30% and 60%. The first microporous aerator used for air aeration and the water distributor used for water distribution are arranged at the bottom of the bioreactor. The second microporous aerator used for malodorous gas aeration is arranged on the middle part of the bioreactor. The first microporous aerator and the second microporous aerator are disc type membrane microporous aerators or other kinds of membrane microporous aerators. The malodorous gas and the air are introduced into the bioreactor from the microporous aerators in the form of microbubbles having a diameter of 100 µm. A dissolved oxygen concentration in the bioreactor is between 2 and 6 mg/L. The suspended carrier is moves an irregular flow state by the drive of the water flow and the gas flow for facilitating the full contact of the gas and the water with the biofilm. A ratio between a height and a diameter of the bioreactor is between 3 and 10, which is finally determined by a concentration of pollutants in the malodorous gas. If the concentration of pollutants is less than 320 mg/m³, the ratio is controlled between 3 and 6; and if the concentration of pollutants is between 320 and 620 mg/m³, the ratio is controlled between 7 and 10.

Improvements of the invention are as follows: the wastewater and the malodorous gas are coupled inside the bioreactor; aeration systems for the malodorous gas and the air are arranged on a middle part and a bottom of the bioreactor, respectively; the suspended carrier adopted is an improved polyethylene suspended carrier, the density of the suspended carrier before the biofilm formation is between 0.97 and 0.98 g/cm³, and a density of the suspended carrier after the biofilm formation is 1 g/cm³; the ratio between the volume of the suspended carrier and the capacity of the bioreactor is between 30% and 60%; and the suspended carrier moves in an irregular flow state in the bioreactor by the drive of the water flow and the gas flow.

A method for purifying malodorous gas and wastewater using the bioreactor comprises the following steps:
1) introducing the wastewater through the water inlet pipe and the water distributor into the bioreactor;
2) introducing the air through the air inlet pipe and the first microporous aerator into the bioreactor in the form of microbubbles; controlling an aeration rate for maintaining a dissolved oxygen concentration in the bioreactor between 2 and 6 mg/L; and allowing the air and the wastewater to flow up synchronously;
3) introducing the malodorous gas through the gas inlet pipe and the second microporous aerator into the bioreactor in the form of microbubbles; allowing the wastewater, the malodorous gas, and the air to flow up synchronously so that the suspended carrier moves randomly by the drive of water flow and air flow to facilitate the contact of organic pollutants in the malodorous gas and the wastewater and the oxygen in the air with a biofilm growing on the suspended carrier to degrade the organic pollutants by microbes; and
4) guiding the wastewater after treatment out of the bioreactor through the annular overflow weir and the water outlet pipe; and releasing the gas out of the water and escaping the gas out of the bioreactor via the gas outlet pipe.

Advantages of the invention are summarized as follows:
1) By controlling the ratio between the height and the diameter of the bioreactor and arranging the water inlet pipe, the water distributor, the microporous aerators, and the gas inlet pipe, the malodorous gas and the wastewater are treated synchronously. Meanwhile, a nutrient solution is not necessitated, and a biofilm having a long biological chain is formed, thereby completely degrading pollutants in the malodorous gas and the wastewater.
2) The microporous aerators are arranged on both the bottom and the middle of the bioreactor, and the suspended carrier moves in a continuous and irregular flow state, which facilitates the mass transfer between the water, the gas, and the biofilm, so that the microbes can completely degrade the pollutants in the malodorous gas and the wastewater. Problems like large pressure drop, biomass accumulation, and filler blockage are prevented.
3) The suspended carrier provides a proper environment to a dominant microflora for propagation. Abundant microfloras of different types improve the degradation ability of the filler and the treatment load. The treatment load can reach 240 g malodorous gas/m³ filler ·h, especially for polyethylene suspended carrier, the degrading ability of the filler and the treatment load are highly improved.

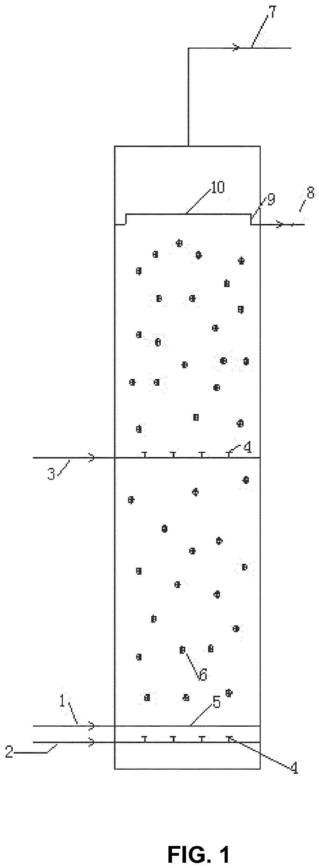

FIG. 1 is a structure diagram of a bioreactor of the invention.

In FIG. 1, the following reference numbers are used: 1. Water inlet pipe; 2. Air inlet pipe; 3. Gas inlet pipe; 4. Microporous aerator; 5. Water distributor; 6. Suspended carrier; 7. Gas outlet pipe; 8. Water outlet pipe; 9. Annular overflow weir; and 10. Net cover.

As shown in FIG. 1, a bioreactor is in the form of a tower. Malodorous gas is introduced into the bioreactor from a middle part. Wastewater and air are introduced into the bioreactor from a bottom. Treated water is discharged out of the bioreactor from an upper part, and gas after treatment is discharged from a top. A suspended carrier, particularly a polyethylene suspended carrier, is filled inside the bioreactor. A density of the suspended carrier before a biofilm formation is between 0.97 and 0.98 g/cm³; and a density of the suspended carrier after the biofilm formation is 1 g/cm³. A ratio between a volume of the suspended carrier and a capacity of the bioreactor is between 30% and 60%. The bioreactor is provided with a first microporous aerator 4 and a water distributor 5 at a bottom, and with a second microporous aerator 4 on a middle part. The first microporous aerator 4 and the second microporous aerator 4 are disc type membrane microporous aerators or other kinds of membrane microporous aerators. The malodorous gas and the air are introduced into the bioreactor from the microporous aerators 4 in the form of microbubbles having a diameter of 100 µm. A dissolved oxygen concentration in the bioreactor is between 2 and 6 mg/L. The suspended carrier moves in an irregular flow state by the drive of the water flow and the gas flow to facilitate the contact of the gas and the water with the biofilm. A ratio between the height and a diameter of the bioreactor is between 3 and 10. The ratio between the height and the diameter of the bioreactor is determined by a concentration of pollutants in the malodorous gas. If the pollutant concentration is less than 320 mg/m³, the ratio is controlled between 3 and 6. If the pollutant concentration is between 320 and 620 mg/m³, the ratio is controlled between 7 and 10.

The wastewater is introduced into the bioreactor through the water inlet pipe 1 and the water distributor 5. The air is introduced into the bioreactor in the form of microbubbles through the air inlet pipe 2 and the first microporous aerator 4. An air aeration rate is controlled for maintaining the dissolved oxygen concentration in the bioreactor between 2 and 6 mg/L. The malodorous gas is introduced into the bioreactor in the form of microbubbles through the gas inlet pipe 3 and the second microporous aerator 4. The wastewater and the malodorous gas flow up along with the air. The suspended carrier 6 inside the bioreactor irregularly moves by the drive of the water flow and the gas flow. Organic pollutants in the malodorous gas and the wastewater and the oxygen in the air fully contact with the biofilm growing on the suspended carrier 6, so that the organic pollutants are degraded by microbes. The wastewater after treatment is discharged out of the bioreactor through the annular overflow weir 9 into the water outlet pipe 8. A net cover is disposed on the annular overflow weir 9 for preventing the suspended carrier from flowing out of the bioreactor along with the water. A filler load is determined by the gas volume to be treated and a concentration of the malodorous gas. When a peak concentration of the malodorous gas is less than 120 mg/m³, the filler load is controlled at 160 g malodorous gas/m³ filler· h; when the peak concentration of the malodorous gas exceeds 240 mg/m³, the filler load is controlled at 110 g malodorous gas/m³ filler· h; and when the peak concentration of the malodorous gas exceeds 650 mg/m³, pretreatment of the malodorous gas is needed. A wastewater load is required to meet the growth requirements of the microbes and is determined according to the water quality of the wastewater.

### Example 1

A preliminary experiment is carried out in a lab. Malodorous gas comprises: ammonia, hydrogen sulfide, and air. An ammonia concentration is between 70 and 80 mg/m³, and a hydrogen sulfide concentration is between 60 and 70 mg/m³. The bioreactor is made of organic glass and has an inner diameter of 160 mm, a ratio between the height and a diameter of 4, and a ratio between a volume of the suspended carrier and a capacity of the coupling bioreactor of 40%. The suspended carrier is a polyethylene suspended carrier. The density of the suspended carrier before a biofilm formation is between 0.97 and 0.98 g/cm³, and a density of the suspended carrier after the biofilm formation is 1 g/cm³. The microporous aerators are disc type membrane microporous aerators. The wastewater to be treated is originated from a municipal wastewater treatment plant and is introduced into the bioreactor through a water inlet pipe and a water distributor arranged on a bottom of the bioreactor. The air is introduced into the bottom of the bioreactor in the form of microbubbles through the air inlet pipe and the first microporous aerator. An air aeration rate is controlled for maintaining the dissolved oxygen concentration in the bioreactor between 3 and 4 mg/L. The air and the water flow up synchronously, and an air empty bed residence time is 9 s. The malodorous gas is introduced into the bioreactor in the form of microbubbles through the gas inlet pipe and the second microporous aerator arranged on a middle part of the bioreactor. The wastewater and the malodorous gas flow up along with the air. The suspended carrier inside the bioreactor irregularly moves by the drive of the water flow and the gas flow. Organic pollutants in the malodorous gas and the wastewater and the oxygen in the air completely contact with the biofilm growing on the suspended carrier, so that the organic pollutants are degraded by microbes. A filler load is 150 g malodorous gas/m³ filler ·h, a wastewater hydraulic retention time is 5 h, a filler load is 180 g COD/ m³ filler ·h. The wastewater after treatment is discharged from an annular overflow weir and into a water outlet pipe; the gas after treatment is released from the water and discharged out through a gas outlet pipe. A removal rate of the ammonia and hydrogen sulfide exceeds 97%, and a COD concentration in the effluent is less than 80 mg/L.

### Example 2

A pilot-scale experiment is carried out in a wastewater treatment plant. A peak concentration of ammonia in malodorous gas is 20 mg/m³, and a peak concentration of hydrogen sulfide is 160 mg/m³. An inner diameter of the bioreactor is 1.6 m, and a ratio between the height and the diameter of the bioreactor is 3. The bioreactor is a steel structure. A ratio between a volume of the suspended carrier and a capacity of the bioreactor is 45%. The wastewater is an influent of a municipal wastewater treatment plant. The process of the treatment is the same as that in Example 1. A dissolved oxygen concentration in the bioreactor is between 3 and 4 mg/L. A gas empty bed retention time is 11 s. A filler load is 130 g malodorous gas/m³ filler ·h. A wastewater hydraulic retention time is 5 h. A filler load is 200 g COD/ m³ filler ·h. A removal rate of the ammonia and hydrogen sulfide during the treatment exceeds 98%, and a COD concentration in the effluent is less than 70 mg/L.

### Example 3

A pilot-scale experiment is carried out in a wastewater treatment plant. A peak concentration of ammonia in malodorous gas is 166 mg/m³, and a peak concentration of hydrogen sulfide is 157 mg/m³. An inner diameter of the bioreactor is 1.2 m, a ratio between the height and the diameter of the bioreactor is 7, that is, the height of the bioreactor is 8.4 m. The bioreactor is a steel structure. A ratio between a volume of the suspended carrier and a capacity of the bioreactor is 50%. The wastewater is an influent of a municipal wastewater treatment plant. The process of the treatment is the same as that in Example 1. A dissolved oxygen concentration in the bioreactor is between 4 and 5 mg/L. A gas empty bed retention time is 24 s. A filler load is 100 g malodorous gas/m³ filler ·h. A wastewater hydraulic retention time is 5 h. A filler load is 230 g COD/ m³ filler ·h. A removal rate of the ammonia and hydrogen sulfide during the treatment exceeds 98%, and a COD concentration in the effluent is less than 80 mg/L.

### Example 4

A pilot-scale experiment is carried out in a wastewater treatment plant. A peak concentration of ammonia in malodorous gas is 94 mg/m³, and a peak concentration of hydrogen sulfide is 287 mg/m³. An inner diameter of the bioreactor is 1.4 m, and a ratio between the height and the diameter of the bioreactor is 9, that is, the height of the bioreactor is 12.2 m. The bioreactor is a steel structure. A ratio between a volume of the suspended carrier and a capacity of the bioreactor is 60%. The wastewater is an influent of a municipal wastewater treatment plant. The process of the treatment is the same as that in Example 1. A dissolved oxygen concentration in the bioreactor is between 5 and 6 mg/L. A gas empty bed retention time is 23 s. A filler load is 100 g malodorous gas/m³ filler ·h. A wastewater hydraulic retention time is 5 h. A filler load is 220 g COD/ m³ filler ·h. A removal rate of the ammonia and hydrogen sulfide during the treatment exceeds 98%, and a COD concentration in the effluent is less than 80 mg/L.

### Example 5

A pilot-scale experiment is carried out in a wastewater treatment plant. A peak concentration of ammonia in malodorous gas is 94 mg/m³, and a peak concentration of hydrogen sulfide is 287 mg/m³. An inner diameter of the bioreactor is 1.4 m. A ratio between the height and the diameter of the bioreactor is 10, that is, the height of the bioreactor is 14 m. The bioreactor is a steel structure. A ratio between a volume of the suspended carrier and a capacity of the bioreactor is 30%. The wastewater is an influent of a municipal wastewater treatment plant. The process of the treatment is the same as that in Example 1. A dissolved oxygen concentration in the bioreactor is between 2 and 3 mg/L. A gas empty bed retention time is 23 s. A filler load is 110 g malodorous gas/m³ filler ·h. A wastewater hydraulic retention time is 5 h. A filler load is 210 g COD/ m³ filler ·h. A removal rate of the ammonia and hydrogen sulfide during the treatment exceeds 97%, and a COD concentration in the effluent is less than 80 mg/L.

### Example 6

A pilot-scale experiment is carried out in a wastewater treatment plant. A peak concentration of ammonia in malodorous gas is 20 mg/m³, and a peak concentration of hydrogen sulfide is 60 mg/m³. An inner diameter of the bioreactor is 1.6 m, and a ratio between the height and the diameter of the bioreactor is 6. The bioreactor is a steel structure. A ratio between a volume of the suspended carrier and a capacity of the bioreactor is 50%. The wastewater is an influent of a municipal wastewater treatment plant. The process of the treatment is the same as that in Example 1. A dissolved oxygen concentration in the bioreactor is between 3 and 4 mg/L. A gas empty bed retention time is 11 s. A filler load is 160 g malodorous gas/m³ filler ·h. A wastewater hydraulic retention time is 5 h. A filler load is 200 g COD/ m³ filler ·h. A removal rate of the ammonia and hydrogen sulfide during the treatment exceeds 98%, and a COD concentration in the effluent is less than 80 mg/L.

## Claims

1. A bioreactor, the bioreactor being in the form of a tower, wherein:
the bioreactor is filled with a suspended carrier (6), the suspended carrier (6) is polyethylene, a biofilm is formed on the suspended carrier, a density of the suspended carrier without the biofilm is between 0.97 and 0.98 g/cm³, and a density of the suspended carrier with the biofilm is 1 g/cm³;
a ratio of a height to a diameter of the bioreactor is between 3 and 10;
a water inlet pipe (1), an air inlet pipe (2), and a first microporous aerator (4) are arranged at a bottom of the bioreactor; the water inlet pipe (1) is connected to a water distributor (5); the air inlet pipe (2) is connected to the first microporous aerator (4);
a gas inlet pipe (3) and a second microporous aerator (4) are arranged at a middle part of the bioreactor and are connected with each other; and
a gas outlet pipe (7) is arranged at a top of the bioreactor;
**characterized in that:**
an annular overflow weir (9) is arranged at an upper part of the bioreactor and is connected to a water outlet pipe (8); and
the bioreactor further comprises a net cover (10) disposed on the annular overflow weir (9).

2. The bioreactor of claim 1, **characterized in that** a ratio of a volume of the suspended carrier to a capacity of the bioreactor is between 30% and 60%.

3. The bioreactor of claim 1 or 2, **characterized in that** the first microporous aerator (4) and the second microporous aerator (4) are disc type membrane microporous aerators.

4. A method for purifying malodorous gas and wastewater by using the bioreactor according to claim 1, the method comprising:
1) introducing the wastewater through the water inlet pipe and the water distributor into the bioreactor;
2) introducing air through the air inlet pipe and the first microporous aerator into the bioreactor in the form of microbubbles; controlling an aeration rate for maintaining a dissolved oxygen concentration in the bioreactor between 2 and 6 mg/L; and allowing the air and the wastewater to flow up synchronously;
3) introducing the malodorous gas through the gas inlet pipe and the second microporous aerator into the bioreactor in the form of microbubbles; allowing the wastewater, the malodorous gas, and the air to flow up synchronously so that the suspended carrier moves randomly by the drive of water flow and air flow to facilitate the contact of organic pollutants in the malodorous gas and the wastewater and the oxygen in the air with a biofilm growing on the suspended carrier to degrade the organic pollutants by microbes; and
4) guiding the wastewater after treatment out of the bioreactor through the annular overflow weir and the water outlet pipe; and releasing the gas out of the water and escaping the gas out of the bioreactor via the gas outlet pipe.

5. The method of claim 4, **characterized in that** the first microporous aerator in step 2) and the second microporous aerator in step 3) are disc type membrane microporous aerators; and the air and the gas are introduced into the bioreactor in the form of microbubbles having a diameter of 100 µm.

## Patentansprüche

1. Bioreaktor, wobei der Bioreaktor in Form eines Turms vorliegt, wobei:
der Bioreaktor mit einem suspendierten Träger (6) gefüllt ist, der suspendierte Träger (6) Polyethylen ist, ein Biofilm auf dem suspendierten Träger gebildet wird, eine Dichte des suspendierten Trägers ohne den Biofilm zwischen 0,97 und 0,98 g/cm³ liegt, und eine Dichte des suspendierten Trägers mit dem Biofilm 1 g/cm³ beträgt;
ein Verhältnis einer Höhe zu einem Durchmesser des Bioreaktors zwischen 3 und 10 liegt;
ein Wassereinlassrohr (1), ein Lufteinlassrohr (2) und ein erster mikroporöser Belüfter (4) am Boden des Bioreaktors angeordnet sind; das Wasserzulaufrohr (1) mit einem Wasserverteiler (5) verbunden ist; das Lufteinlassrohr (2) mit dem ersten mikroporösen Belüfter (4) verbunden ist;
ein Gaseinlassrohr (3) und ein zweiter mikroporöser Belüfter (4) an einem mittleren Teil des Bioreaktors angeordnet und miteinander verbunden sind; und
ein Gasauslassrohr (7) oben am Bioreaktor angeordnet ist;
**dadurch gekennzeichnet, dass:**
ein ringförmiges Überlaufwehr (9) an einem oberen Teil des Bioreaktors angeordnet und mit einem Wasserauslassrohr (8) verbunden ist; und
der Bioreaktor ferner eine Netzabdeckung (10) umfasst, die auf dem ringförmigen Überlaufwehr (9) angeordnet ist.

2. Bioreaktor nach Anspruch 1, **dadurch gekennzeichnet, dass** ein Verhältnis eines Volumens des suspendierten Trägers zu einer Kapazität des Bioreaktors zwischen 30 % und 60 % beträgt.

3. Bioreaktor nach Anspruch 1 oder 2, **dadurch gekennzeichnet, dass** der erste mikroporöse Belüfter (4) und der zweite mikroporöse Belüfter (4) mikroporöse Membranbelüfter vom Scheibentyp sind.

4. Verfahren zum Reinigen von übelriechendem Gas und Abwasser unter Verwendung des Bioreaktors nach Anspruch 1, wobei das Verfahren umfasst:
1) Einleiten des Abwassers durch das Wassereinlassrohr und den Wasserverteiler in den Bioreaktor;
2) Einführen von Luft durch das Lufteinlassrohr und den ersten mikroporösen Belüfter in den Bioreaktor in Form von Mikrobläschen; Steuern einer Belüftungsrate zum Aufrechterhalten einer Konzentration an gelöstem Sauerstoff im Bioreaktor zwischen 2 und 6 mg/l; und Zulassen, dass die Luft und das Abwasser synchron nach oben strömen;
3) Einführen des übelriechenden Gases durch das Gaseinlassrohr und den zweiten mikroporösen Belüfter in den Bioreaktor in Form von Mikrobläschen; Strömen lassen des Abwassers, des übelriechenden Gases und der Luft synchron nach oben, so dass sich der suspendierte Träger durch den Antrieb des Wasser- und Luftstroms zufällig bewegt, um den Kontakt von organischen Schadstoffen in dem übelriechenden Gas und dem Abwasser und dem Sauerstoff in der Luft mit einem Biofilm, der auf dem suspendierten Träger wächst, zu erleichtern, um die organischen Schadstoffe durch Mikroben abzubauen; und
4) Leiten des Abwassers nach der Behandlung aus dem Bioreaktor durch das ringförmige Überlaufwehr und das Wasserauslassrohr; und Ablassen des Gases aus dem Wasser und Entweichen des Gases aus dem Bioreaktor über das Gasauslassrohr.

5. Verfahren nach Anspruch 4, **dadurch gekennzeichnet, dass** der erste mikroporöse Belüfter in Schritt 2) und der zweite mikroporöse Belüfter in Schritt 3) mikroporöse Membranbelüfter vom Scheibentyp sind; und die Luft und das Gas in Form von Mikrobläschen mit einem Durchmesser von 100 µm in den Bioreaktor eingeführt werden.

## Revendications

1. Bioréacteur, le bioréacteur étant sous la forme d'une tour, dans lequel :
le bioréacteur est rempli avec un véhicule en suspension (6), le véhicule en suspension est le polyéthylène, un biofilm est formé sur le véhicule en suspension, une densité du véhicule en suspension sans le biofilm est comprise entre 0,97 et 0,98 g/cm³, et une densité du véhicule en suspension avec le biofilm est de 1 g/cm³ ;
un rapport d'une hauteur à un diamètre du bioréacteur est compris entre 3 et 10 ;
un tuyau d'entrée d'eau (1), un tuyau d'entrée d'air (2) et un premier aérateur microporeux (4) sont disposés à une partie inférieure du bioréacteur ; le tuyau d'entrée d'eau (1) est connecté à un distributeur d'eau (5) ; le tuyau d'entrée d'air (2) est connecté au premier aérateur microporeux (4) ;
un tuyau d'entrée de gaz (3) et un second aérateur microporeux (4) sont disposés à une partie de milieu du bioréacteur et sont connectés l'un à l'autre ; et
un tuyau de sortie de gaz (7) est disposé à une partie supérieure du bioréacteur ;
**caractérisé en ce que :**
un déversoir de débordement annulaire (9) est disposé à une partie supérieure du bioréacteur et est connecté à un tuyau de sortie d'eau (8) ; et
le bioréacteur comprend en outre un couvercle net (10) disposé sur le déversoir de débordement annulaire (9).

2. Bioréacteur selon la revendication 1, **caractérisé en ce qu'**un rapport d'un volume du véhicule en suspension à une capacité du bioréacteur est compris entre 30 % et 60 %.

3. Bioréacteur selon la revendication 1 ou 2, **caractérisé en ce que** le premier aérateur microporeux (4) et le second aérateur microporeux (4) sont des aérateurs microporeux à membrane de type disque.

4. Procédé de purification du gaz et des eaux usées malodorants en utilisant le bioréacteur selon la revendication 1, le procédé comprenant les étapes consistant à :
1) introduire les eaux usées à travers le tuyau d'entrée d'eau et le distributeur d'eau dans le bioréacteur ;
2) introduire de l'air par le tuyau d'entrée d'air et le premier aérateur microporeux dans le bioréacteur sous forme de microbulles ; contrôler une vitesse d'aération pour maintenir une concentration d'oxygène dissous dans le bioréacteur entre 2 et 6 mg/L ; et permettre à l'air et aux eaux usées de s'écouler vers le haut en synchronie ;
3) introduire le gaz malodorant à travers le tuyau d'entrée de gaz et le second aérateur microporeux sous forme de microbulles ; permettre aux eaux usées, au gaz malodorant et à l'air de s'écouler vers le haut en synchronie de sorte que le véhicule en suspension se déplace au hasard par la direction de l'écoulement d'eau et de l'écoulement d'air pour faciliter le contact des polluants organiques dans le gaz malodorant et les eaux usées et l'oxygène dans l'air avec un biofilm croissant sur le véhicule en suspension pour faire dégrader les polluants organiques par les microbes ; et
4) guider les eaux usées après traitement hors du bioréacteur par le déversoir de débordement annulaire et le tuyau de sortie d'eau ; et libérer le gaz hors de l'eau et faire échapper le gaz hors du bioréacteur via le tuyau de sortie de gaz.

5. Procédé selon la revendication 4, **caractérisé en ce que** le premier aérateur microporeux dans l'étape 2) et le second aérateur microporeux dans l'étape 3) sont des aérateurs microporeux à membrane de type disque ; et l'air et le gaz sont introduits dans le bioréacteur sous forme de microbulles ayant un diamètre de 100 µm.
